# EUROPEAN PATENT APPLICATION

(11) **EP 1 959 703 A1**
(43) Date of publication of application: **20.08.2008**
(21) Application number: 07250618.1
(22) Date of filing: 15.02.2007
(51) Int. Cl.: H04Q 7/38

(54) **Handover of wireless connections**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A connection between a communications terminal (1) and a communications network is arranged such that on detection of imminent (341,352) degradation or loss of such connection, the utilisation of the connection is maximised in advance of such degradation. The network temporarily reallocates the maximum bandwidth that the terminal is capable of using to that terminal (1), which may result in a small temporary degradation of the bandwidth available to other terminals (33), and the terminal (1) downloads the data most likely to be required next to a cache (352) (in the case of specific web pages, identified by recent accession, bookmarks, or hyperlinks from the page currently being viewed), or a buffer (if the data is being streamed) using this extra bandwidth made available. Streamed data may be accelerated by omitting error correction data, colour difference data or other elements in order to maximise the duration of the data that can be placed in the buffer in the time available.
Warning of the impending impairment (30) may be given by degrading the perceived quality of the output in advance of the actual impairment, thereby giving the user the opportunity to take any action possible to reverse or delay the actual impairment.

## Description

This invention relates to the field of handover of wireless connections, and in particular in the field of data connections using heterogeneous links). IEEE standard 802.21 describes a protocol to support handover between heterogenous access technologies (including fixed networks, eg Ethernet, and wireless networks), based on using various triggers to assist in the decision on when to effect a handover. Predictive triggers provide advanced warnings on loss of signal including information on the likelihood of the signal being lost. Connection Managers use this information to do a make-before-break connection to another suitable network.

The connection manager in the user device makes decisions on handover based on triggers on signal quality on the network on which it is currently working. It can also interrogate an Information Server on the network using the current access method to "discover" what other networks are available and their capabilities (bandwidth, QoS etc). The network also has a connection management function, cooperating with that in the user device. This performs operations based on the same information, but from a network perspective, for example for load balancing purposes. Although handover protocols ensure that service is not lost altogether, there may be a difference in quality between the old and new connections. For example, the new connection may be significantly slower than the previous one. Such loss of quality may be inconvenient for the user, and make it difficult, or even impossible, to continue with the task he is engaged upon. There are also situations in which no handover is possible, and connection is lost altogether.

The present invention proposes the use of predictive triggers to mitigate the effects of such impairment or loss of signal on a current network.

According to a first aspect of the invention, there is provided a communications terminal having means to establish communication with a communications network, having means to detect imminent degradation of such connection, and means to maximise the utilisation of the connection to the network in advance of such impairment.

According to another aspect of the invention, the network is configured to respond to a handover request from a terminal, and has means to identify whether the capabilities of the connection to which the terminal is to be handed over will result in an degradation of the signal. Alternatively, it may monitor the signal quality itself to determine that such degradation is imminent.

The invention also provides a method of controlling a connection between a communications terminal and a communications network, wherein on detection of imminent degradation of such connection, the utilisation of the connection is maximised in advance of such degradation.

Unless the context clearly demands otherwise, in this specification the term "degradation", relating to a signal, relates to a loss of some or all of the available bandwidth.

The terminal may have means to initiate a handover request, means to identify the capabilities of a connection to which a handover is to be performed, and to determine whether said capabilities will result in degradation of the connection.

The terminal may use the temporarily enhanced capability to identify data that is likely to be required by the user and cache it for subsequent retrieval after the degradation has occurred. The data in question, and the manner of its identification, will depend on the type of service the user is accessing. In one particular embodiment, a web browser is configured to identify addresses linked to the web page currently being displayed by the device. The web browser may, alternatively or in addition, identify addresses frequently accessed by the user, for example from the "bookmark" or "history" functions of a browser, and access those addresses for caching. In an alternative embodiment, the streaming rate of a video is increased to provide an increased amount of data in the buffer store. To further optimise the use of the available bandwidth, elements of the streamed data may be omitted such that the duration of the data stored in the buffer store is maximised.

It should be understood that on many data links, the available bandwidth is normally only used for very brief periods: for example a user may download a document using a web browser at a very high data rate, and then spend several minutes studying it, during which time no data is being transferred at all. It is this intermittent nature of much data communications that allows a large number of users to be served by the same network: conflicts between users contending for the same resource are relatively rare and transient. Consequently, the network may be able to support the rapid download required by the user terminal to generate the cache or buffer when detecting imminent loss of connectivity without modification. However, in a preferred arrangement, the network has means for suspending data feeds to other users, or limiting their data rates, to allow provision of maximum bandwidth to the user experiencing the degrading signal, to maximise the amount that can be downloaded.

In such an arrangement, it is desirable that the network itself monitors the signal quality to ensure that such degradation is indeed imminent. This will prevent terminals simulating a degradation in order to achieve a greater bandwidth, at the expense of other users. The network may also have provision to apportion bandwidth between a number of terminals all requesting maximum bandwidth for caching purposes. Such apportionment may take account of recent activity, and of the bandwidth availability in the respective network connections to which the users are to be handed over.

The invention may incorporate provision to encourage or advise users to remain in range to continue the existing connection, or to delay transfer. This may be implemented by artificially exaggerating the degradation of the output perceived by the user, to persuade the user to remain in range of the original connection. This would have the additional advantage of saving battery power, as the handset would continue to receive a stronger signal for a longer time.

An embodiment of the invention will now be described by way of example only and with reference to the accompanying drawings in which
Figure 1 is a schematic representation of a user device according to the invention:
Figure 2 is a schematic representation of the relevant elements of the network that interact with the user device of Figure 1
Figure 3 is a flow diagram representing the processes performed by the invention

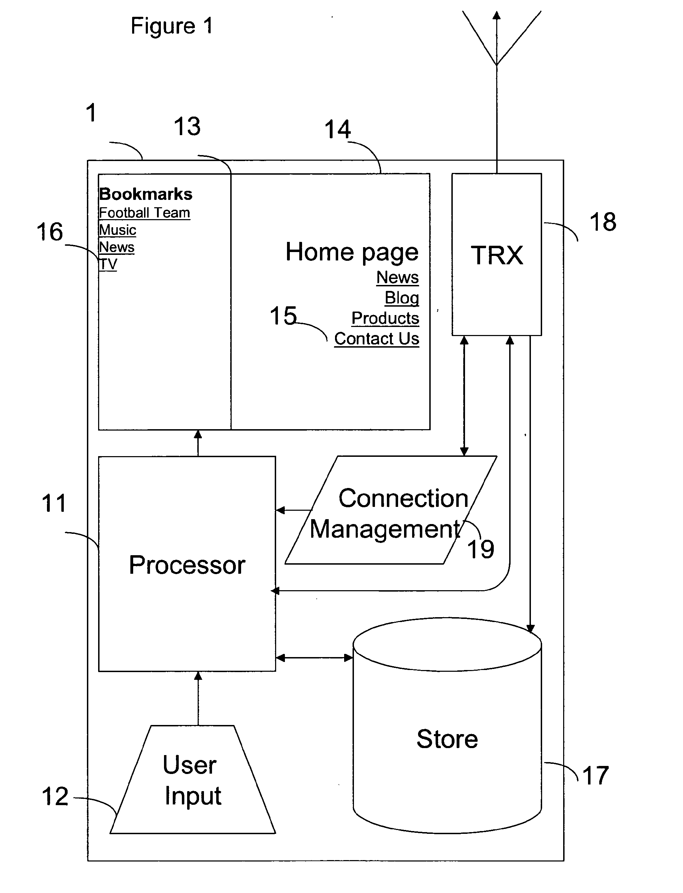

Figure 1 depicts a user device 1 equipped for wireless communication. It has a central processor 11, a user input device 12 (such as a keypad) and a user output device 13 (such as a display screen). Other input and output devices may be provided as well or instead, such as microphones and loudspeakers.

The output device 13 is depicted displaying a web page 14 incorporating several hyperlinks 15, and also a set of other links 16 such as those accessed frequently and/or recently by the user. The handset also incorporates a memory 17.

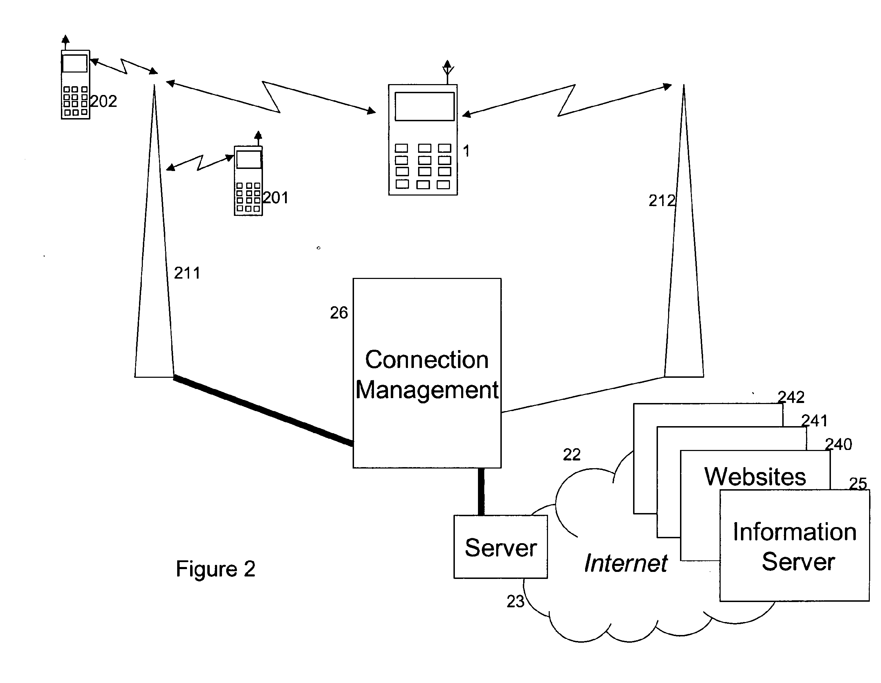

Interaction with a communications network is provided by means of a transceiver 18. Requests for data generated using the input device 12 are transmitted through the transceiver 18 to a communications network 2 (to be discussed with reference to Figure 2) and data returned in response to the request is processed 11 for display on the display 13, for example as a web page 14. Address data relating to the links 15, 16 are extracted by the processor 11 and stored in the memory 17.

A handover control system 19 monitors the quality of the communications link between the device 1 and the network 2, and attempts to initiate a handover to a different communication links should a more suitable one be identified.

Figure 2 depicts the user device 1, along with two other user devices 201, 202, in wireless communication with a fixed transceiver 211. It should be noted that the other user devices 201, 202 may be conventional - the network elements of the invention can operate conventionally with existing user handsets.

The fixed transceiver 211 is one of several (e.g. transceiver 212) through which the user device 1 may communicate with a server 22, giving access through the internet 23 or a similar access network to a number of different data sources 240, 241, 242. In this schematic, both transceivers 251, 252 and the server 22 are connected using the same Connection Manager 26. but this is not necessarily the case, and there may be more than one such connection manager involved. Indeed, the transceivers may operate on different systems, such as a wireless LAN (local area network) and a GPRS public cellular system. These systems may, of course, have very different bandwidth availability and it is the existence of such differences which make the invention of particular utility.

The connection management system 26 directs handover of the user handset 1 between fixed transceivers 211, 212, in response to signal quality measurements made on the respective wireless links between those transceivers and the handset 1, and in response to requests for the connection management system 19 of the user handset 1. The connection manager has knowledge of all the current sessions connected through it, and the ability to modify them accordingly, for example by re-negotiating current SIP sessions for example for load balancing purposes. A Session Initiation Protocol (SIP) is used for establishing, modifying and terminating multimedia sessions. Inside the SIP message on setting up a call (using the INVITE method), is a session description (SDP - Session Description Protocol). This session description defines the parameters of the call - for example codec, bit-rate used. During a call it is possible to modify these parameters by sending a "re-INVITE" message.

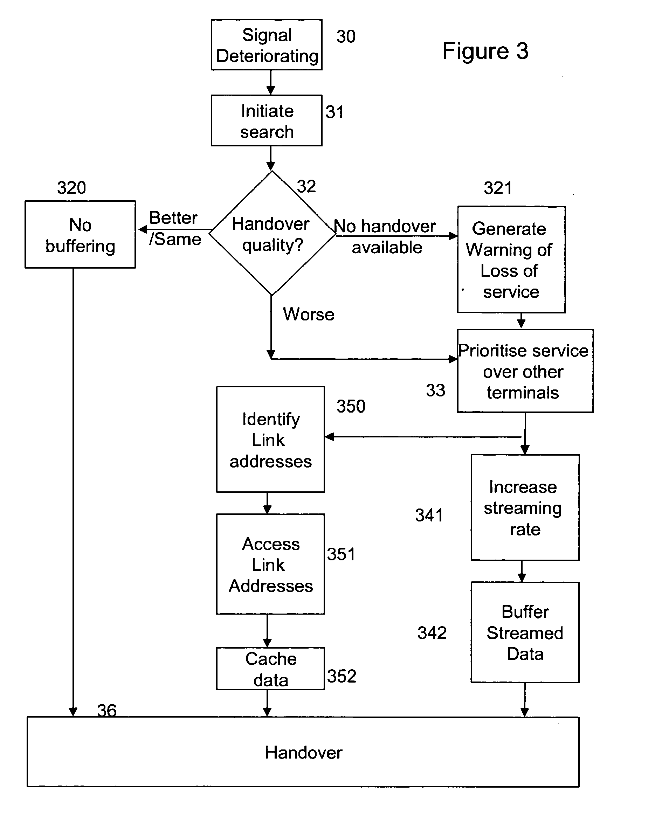

The method of operation of the invention will now be described with reference to Figure 3.

When the handset 1 receives triggers of the signal deteriorating (30), it probes an entity accessible through the Internet called an Information Server (IS) 25. The information Server holds information on other networks available based on the user's location as provided by the user. This Information Server is defined in the 802.21 spec. On identifying a potential new connection 252 a decision is taken (step 32) as to whether buffering is required. Should the bandwidth be as good, or even better, than that required for the task currently in hand, the handover (36) proceeds as normal, and no buffering is required (320).

Should no suitable connection be available to hand over to, the user is warned of an impending loss of service (320), allowing him to take remedial action if possible, such as remaining in, or returning to, the area of adequate coverage. Such loss of service may be because no transceivers are within range, or because the only available ones cannot support the service currently being used.

Whether service is to be impaired or lost altogether, the connection management system 26 co-operates with the handover control 19 of the handset 1 to download as much data as possible before the handover or loss of service occurs. Firstly, the connection management system 26 prioritises the handset 1 over any other terminals 201, 202 (step 33). This allocates to the connection between the fixed transceiver 211 and the handset 1 the maximum bandwidth that the handset capable of supporting. The bandwidth is made available by sending a "re-INVITE" to other handsets defining new (lower) parameters. This may temporarily impair the service to other handsets 201, 202, but the loss will be brief and, typically, will be evenly distributed amongst several such handsets.

Two different scenarios are illustrated in Figure 3 for the way this prioritised capacity is used. In the first scenario (steps 341, 342), the handset 1 is being used for streaming data. In this situation the streaming rate is increased to the maximum the handset can handle, and the data is buffered in the store 17. If it is detected that either the estimated time available before the signal is lost, or the capacity of the buffer 17, is inadequate to complete the transmission, the quality of the streamed signal may be reduced to one requiring less bandwidth - for example by removal of colour-difference signals (so that graphics are generated in monochrome) or error correction data. This effectively increases the duration of the data stored in the buffer, by retaining only the most essential data.

This reduction in quality may occur before the signal is actually impaired - indeed it will in general occur during the period of enhanced bandwidth. This exaggeration of the rate of impairment of the output to the user has the effect of warning the user that the signal quality is about to deteriorate, so that he may, if he has the opportunity, take remedial action to remain in, or return to, the region of good signal quality.

This can also be achieved by the re-invite process already discussed. On receiving the predictive triggers for imminent signal loss, the connection manager in the user device may re-negotiate the session using downgraded parameters - more, or earlier, than is required - to suggest to the user that he should, if possible, return to an area with better signal coverage.

In the second scenario (steps 350, 351, 352) the handset 1 is being used to browse "web" pages. In this situation the handset 1 interfaces with a web accelerator such as that provided by Google, which pre-fetches certain pages onto the computer in advance. The processor 11, currently connected to a site 240, identifies the addresses 241, 242, associated with the links 15, 16 that are most likely to be accessed next by the user (350). These addresses 241, 242 are accessed through the web server 22 (step 351) in anticipation of the user input 12. Again, the maximum bandwidth is allocated to the handset (step 33) for the duration of this caching process (351).. The data downloaded from these sites 241, 242 is cached in the handset memory 17 (step 352) until an actual request is made by the user input 12, when it can be loaded to the display 13.

Handover 36 (or disconnection) may then take place, with the user having obtained the maximum data transfer possible on the old connection. Connection to the other handsets 201, 202 may then be restored to their normal level.

## Claims

1. A communications terminal having means to establish communication with a communications network, having means to detect imminent degradation of such connection, and means to maximise the utilisation of the connection to the network in advance of such impairment.

2. A communications terminal according to claim 1, having means to initiate a handover request, means to identify the capabilities of the connection to which a handover is to be performed, and means to determine whether said capabilities will result in degradation of the connection.

3. A communications terminal according to claim 1 or claim 2, including means to identify data that is likely to be required by the user, a web browser to access such data, and means to cache such data for subsequent retrieval.

4. A communications terminal according to claim 3, wherein the web browser is configured to identify addresses linked to the web page currently being displayed by the device.

5. A communications terminal according to claim 3, wherein the web browser is configured to identify addresses stored in the device and to access those addresses for caching.

6. A communications terminal according to claim 1 or 2, including means to increase the streaming rate of a streamed transmission when imminent degradation of signal is identified.

7. A communications terminal according to claim 6, including means to remove elements of the streamed data such that the duration of the data stored in the buffer store is maximised.

8. A communications terminal according to any preceding claim, having means to degrade the perceived call quality on the connection on which degradation is imminent in advance of the actual degradation in signal quality.

9. A communications network having means to establish communication with a plurality of terminals, means to detect imminent degradation of one of the connections, and means for limiting or suspending data feeds to other users, to allow provision of maximum bandwidth to the terminal experiencing the degrading signal.

10. A communications network according to claim 9, wherein the network is configured to respond to a handover request from a terminal, and means to identify whether the capabilities of the connection to which the terminal is to be handed over will result in a degradation of the signal.

11. A communications network according to claim 9, wherein the network has means to monitor the signal quality to determine that such degradation is imminent.

12. A communications network according to claim 9, 10 or 11, having provision to apportion bandwidth between a plurality of terminals all requesting maximum bandwidth, according to the amount of recent activity on each connection, and of the bandwidth availability in the respective network connections to which the users are to be handed over.

13. A method of controlling a connection between a communications terminal and a communications network, wherein on detection of imminent degradation of such connection, the utilisation of the connection is maximised in advance of such degradation.

14. A method according to claim 13, having means to degrade the perceived call quality on the connection on which degradation is imminent in advance of the actual degradation in signal quality.

15. A method according to claim 13 or 14, wherein imminent degradation of signal is identified from a handover request.

16. A method according to claim 15, wherein data that is likely to be required by the user is identified and accessed, and such data is cached in the terminal for subsequent retrieval.

17. A method according to claim 16, wherein addresses linked to the web page currently being displayed by the device are accessed by the terminal for caching.

18. A method according to claim 16, wherein recently- or frequently-used addresses stored in the user device are accessed by the terminal for caching.

19. A method according to claim 15, wherein the streaming rate of a transmission is increased when imminent degradation of signal is identified.

20. A method according to claim 19, wherein elements of the streamed data are omitted such that the duration of the data stored in the buffer store is maximised.

21. A method according to any of claims 13 to 20, wherein the network limits or suspends data feeds on connections other than the connection on which imminent degradation has been detected, to allow provision of maximum bandwidth on the connection experiencing the degrading signal.

22. A method according to claim 21, wherein bandwidth is apportioned between a plurality of terminals all requesting maximum bandwidth, according to the amount of recent activity on each connection, and of the bandwidth availability in the respective network connections to which the users are to be handed over.
